# EUROPÄISCHE PATENTSCHRIFT

(11) **EP 2 450 904 B1**
(45) Veröffentlichungstag und Bekanntmachung des Hinweises auf die Patenterteilung: **15.06.2016**
(21) Anmeldenummer: 11008225.2
(22) Anmeldetag: 12.10.2011
(51) Int. Cl.: G21C 9/00, G21C 11/08, G21C 15/18

(54) **Kernreaktor mit von aussen flutbarem Reaktordruckbehälter**
Nuclear reactor with reactor pressure vessel flooded from outside
Réacteur nucléaire avec cuve sous pression pouvant être remplis de l'extérieur

(30) Priorität: 04.11.2010 DE 102010050210
(43) Veröffentlichungstag der Anmeldung: 09.05.2012
(73) Patentinhaber: AREVA GmbH, 91052 Erlangen (DE)
(72) Erfinder: Worsch, Marcus, 91083 Baiersdorf (DE); Scheler, Reiner, 91301 Forchheim (DE)
(74) Vertreter: Tergau & Walkenhorst Patentanwälte - Rechtsanwälte

(56) Entgegenhaltungen:
- JP-A- 2005 049 227
- US-A- 5 699 394
- US-A1- 2008 198 960

## Beschreibung

Die Erfindung betrifft einen Kernreaktor, insbesondere einen Leichtwasserreaktor, speziell einen Siedewasserreaktor, der zur Stromerzeugung in einem Kernkraftwerk eingesetzt wird. Im Zuge der Weiterentwicklung der Kernreaktor- bzw. der Leichtwasserreaktortechnologie sollen einerseits Effektivität sowie Wirtschaftlichkeit gesteigert werden und andererseits soll durch höhere Qualitäts- sowie Sicherheitsstandards die Wahrscheinlichkeit für das Auftreten möglicher Störfälle verringert werden. Da Störfälle im Allgemeinen jedoch trotz aller Sicherheitsmaßnahmen nicht gänzlich ausgeschlossen werden können, werden bei einem Kernreaktor-Sicherheitskonzept bestimmte Störfälle stets mit einkalkuliert, um durch geeignete Vorkehrungen auch dann noch eine Gefährdung der Bevölkerung zu verhindern. In diesem Kontext bezeichnet man als größten anzunehmenden Unfall (GAU) einen Störfall, für den das Sicherheitskonzept eines Kernreaktors noch ausgelegt ist.

Aus der Veröffentlichung WO 2009 / 053322 A1 ist ein Kernreaktor bekannt, für dessen Reaktordruckbehälter im Störfall, genauer im Falle einer Überhitzung des Reaktorkerns und somit einer drohenden Kernschmelze, eine Außenkühlung vorgesehen ist. Die Außenkühlung erfolgt dabei mit Hilfe einer Flüssigkeit, welche im Bedarfsfall in einen Hohlraum zwischen Reaktordruckbehälter und Betonhülle eingeleitet wird und einen Teil der thermischen Energie absorbiert. Im Normalbetrieb hingegen sind thermische Verluste unerwünscht, weswegen das Konzept der Außenkühlung des Reaktordruckbehälters diesbezüglich unvorteilhaft ist.

Ausgehend hiervon war es gewünscht, einen verbesserten Kernreaktor zu entwickeln, bei dem einerseits eine effektive Notfall-Außenkühlung des Reaktordruckbehälters ermöglicht ist, und bei dem andererseits eine gute thermische Isolierung des Reaktordruckbehälters im Normalbetrieb verwirklicht ist.

Eine mögliche Lösung des genannten Problems ist in US 2008/198960 A1 oder US 5 699 394 A beschrieben.

Eine mögliche Ausgestaltung von Schwimmerventilen ist in einem anderen Zusammenhang in JP 2005 049227 A beschrieben.

Bei dem in US 2008/198960 A1 beschriebenen Kernreaktor ist dessen Reaktordruckbehälter von einer thermischen Isolierung (Isolierhülle) umschlossen, was eine Reduzierung der Wärmeverluste im Normalbetrieb des Kernreaktors zur Folge hat. Beide Reaktorelemente, der Reaktordruckbehälter und die thermische Isolierung, sind durch einen Flutungsraum räumlich voneinander getrennt. In der thermischen Isolierung ist ein verschließbarer Durchbruch vorgesehen, durch welchen im Störfall eine Kühlflüssigkeit, zum Beispiel Kühlwasser, zur Außenkühlung des Reaktordruckbehälters in den Flutungsraum eingeleitet werden kann. Das in der Schließstellung an der thermischen Isolierung anliegende Verschlusselement hebt sich infolge der Auftriebskraft, wenn es vom Kühlwasser umströmt wird und bildet damit gewissermaßen ein Schwimmerventil. Auf diese Weise wird bedarfsweise eine Notfallkühlung realisiert, deren Effektivität im Wesentlichen nicht durch die eingesetzte thermische Barriere beeinträchtigt ist.

Ausgehend hiervon liegt der Erfindung die Aufgabe zugrunde, eine zuverlässige Alternative zu der oben beschriebenen Lösung anzugeben, die ein Öffnen und später ein automatisches, sicheres Wiederverschließen des Durchbruchs ermöglicht.

Diese Aufgabe ist durch die Merkmalskombination des Anspruchs 1 in erfinderischer Weise gelöst. Die Unteransprüche beinhalten teilweise zweckmäßige und teilweise für sich selbst erfinderische Weiterbildungen dieser Erfindung.

Gemäß einer sehr zweckmäßigen Variante eines erfindungsgemäßen Kernreaktors erfolgt die Positionierung des Durchbruches im Bodenbereich des Reaktordruckbehälters. Auf diese Weise kann der Durchbruch beispielweise sowohl als Einlaßöffnung als auch als Abflußöffnung genutzt werden.

Vorteilhaft ist darüber hinaus eine Ausführungsform mit mehr als einem verschließbaren Durchbruch in der thermischen Isolierung. Damit einher geht eine erhöhte maximale Durchflußmenge, wodurch der Flutungsraum in kürzerer Zeit mit Kühlflüssigkeit aufgefüllt werden kann.

Gemäß der Erfindung ist ein einfacher passiver Öffnungs- und Schließmechanismus, nämlich in Form eines Schwimmerventils, für einen jeden Durchbruch vorgesehen. Entsprechende passive Mechanismen bedürfen keiner aktiven Steuerung und keiner Zufuhr von Fremdenergie und sind deshalb typischerweise weniger defekt- oder störanfällig.

Dabei ist erfindungsgemäß vorgesehen, dass im Normalbetrieb des Kernreaktors je ein Ventilkörper von der Flutungsraumseite her einen jeden Durchbruch vollständig abdeckt und damit verschließt. So wird die fehlende thermische Isolierwirkung im Bereich eines jeden Durchbruches zumindest teilweise kompensiert. Ein solcher Ventilkörper ist zudem mit einer Ventilstange verbunden, die den entsprechenden Durchbruch vertikal durchsetzt. An der Ventilstange wiederum ist ein außerhalb der thermischen Isolierung angeordneter Schwimmkörper fixiert. Wird nun im Störfall der Bereich um den Reaktordruckbehälter samt thermischer Isolierung mit einer Kühlflüssigkeit ausgefüllt, so bewirkt die resultierende Auftriebskraft eine Anhebung des Schwimmkörpers mitsamt des über die Ventilstange daran befestigten Ventilkörpers, wodurch die Kühlflüssigkeit durch den dann geöffneten Durchbruch in den Flutungsraum einströmen kann.

Hierbei ist es vorteilhaft, wenn das aus Ventilkörper, Ventilstange und Schwimmkörper gebildete Ventil derart dimensioniert ist, dass dieses mit einem großzügigen Spielsitz im Durchbruch einliegt. Dadurch soll nicht nur eine hinreichende Beweglichkeit sondern vor allem ein möglichst günstiger Kühlflüssigkeitsdurchfluß gewährleitet werden.

Gemäß einer bevorzugten Ausführungsform des Ventils ist die Ventilstange von ihrem ventilkörperseitigen Ende her in Axialrichtung ausgehöhlt, insbesondere ausgebohrt, wobei sich die Aushöhlung bzw. Ausbohrung bis in den Schwimmkörper hinein erstreckt und dort in einen Hohlraum ausmündet. Als Folge fließt bei ausreichend aufgefülltem Flutungsraum Kühlflüssigkeit durch die Ventilstange in den Hohlraum des Schwimmkörpers. Daraufhin verringert sich die Auftriebskraft so weit, bis die Gewichtskraft des Ventils überwiegt und selbiges den Durchbruch wieder verschließt. Ein derartiges Ventildesign eignet sich besonders, wenn eine möglichst schnelle Flutung und ein anschließendes Halten des Flüssigkeitsstandes gewünscht sind.

Desweiteren weist der Schwimmerkörper des Ventils auf seiner mit der Ventilstange verbundenen Oberseite vorzugsweise vereinzelt angeordnete Distanzelemente oder Distanzvorsprünge auf. Diese verhindern bei einer störfallbedingten Einleitung von Kühlflüssigkeit, dass die Oberseite in Folge der wirkenden Auftriebskraft von außen an der thermischen Isolierung anliegt und so den Durchbruch verschließt. Stattdessen fließt die Kühlflüssigkeit zwischen den Distanzelementen bzw. zwischen den Distanzvorsprüngen weitestgehend ungehindert hindurch und sodann durch den Durchbruch in den Flutungsraum hinein.

Schließlich ist es auch vorteilhaft, den Durchbruchsverschluß und, sofern ein Ventil zum Einsatz kommt, insbesondere den Ventilkörper aus einem thermisch isolierenden Material zu fertigen. Die Kompensation der fehlenden thermischen Isolierwirkung im Bereich eines jeden Durchbruches erfolgt dann wesentlich effektiver.

Die mit der Erfindung erzeilten Vorteile bestehen insbesondere darin, einen verschließbaren Durchbruch bzw. eine Öffnung durch die einen Reaktordruckbehälter umgebende thermische Isolierhülle bereitzustellen, durch den bzw. durch die bedarfsweise eine Einleitung von Kühlwasser in den Zwischenraum zwischen der Isolierhülle und dem Reaktordruckbehälter zu dessen Außenkühlung erfolgen kann. Dabei werden in vorteilhafter Ausgestaltung drei Randbedingungen erfüllt: Erstens ist die jeweilige Öffnung während des Normalbetriebs verschlossen, damit keine unerwünschte Luftkonvektion auftritt. Zweitens wird die jeweilige Öffnung bei der Notfall-Flutung automatisch und ohne externe Energiezufuhr mit einem wohldefinierten Strömungsquerschnitt freigegeben. Drittens verschließt sich die jeweilige Öffnung nach einer gewissen Zeitspanne, nach entsprechendem Anstieg des Flüssigkeitspegels, selbsttätig wieder. Im "eingeschwungenen" Zustand können dann die Zufuhr und der Austausch von Kühlflüssigkeit vorteilhaft über alternative Strömungswege erfolgen.

Anhand eines Ausführungsbeispiels wird die Erfindung nachfolgend weiter beschrieben. Es zeigen in jeweils schematisierter Darstellung:
- Fig. 1: einen Längsschnitt durch einen Kernreaktor mit einem Flutungsraum,
- Fig. 2: einen Querschnitt durch ein in einem Durchbruch einer Isolierhülle positioniertes Schwimmerventil im Betriebszustand des Kernreaktors,
- Fig. 3: einen Querschnitt durch das Schwimmerventil gemäß Fig. 2 während einer Störfallflutung, und
- Fig. 4: einen Querschnitt durch das Schwimmerventil gemäß Fig. 2 und 3 nach erfolgter Störfallflutung.

Einander entsprechende Teile sind in allen Figuren mit den gleichen Bezugszeichen versehen.

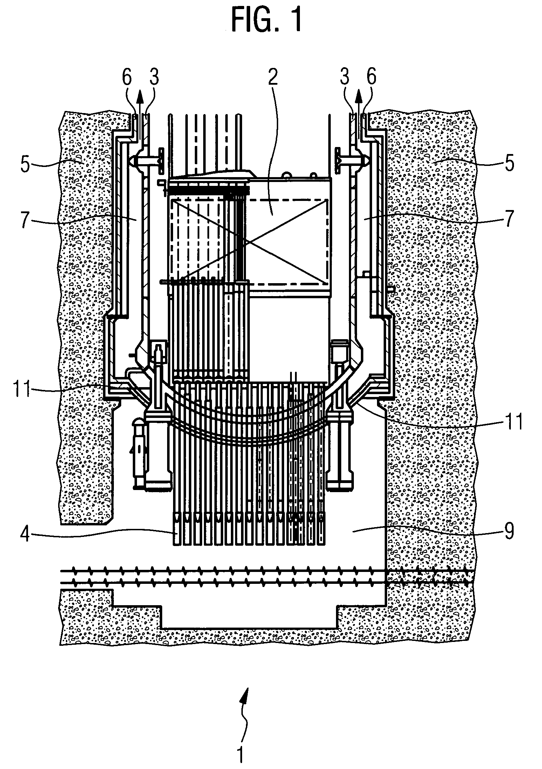

Ein erfindungsgemäßer Kernreaktor 1 ist in Fig. 1 schematisch dargestellt. Im oberen Drittel des ausschnittsweise abgebildeten Längsschnittes befindet sich der sogenannte Kern 2 des Kernreaktors 1, in welchem die moderierte Kernzerfallslawine ausgelöst wird. Eingeschlossen ist der von Reaktorkühlmittel umspülte Kern 2 in einem Reaktordruckbehälter 3. Am Boden des Reaktordruckbehälters 3 sind Kontroll- oder Steuerstäbe 4 angeordnet, die im Bedarfsfall bis in den Kern 2 hinein verfahren werden können. Eingebettet ist die Apparatur in einen Mantel aus Beton. Dieser Betonmantel 5 dient einerseits als Halterung für den Reaktordruckbehälter 3 samt Steuerstäben 4 und andererseits als Strahlungsschutzhülle. Zwischen dem Betonmantel 5 und dem Reaktordruckbehälter 3 ist eine thermische Isolierung 6 bzw. Isolierhülle vorgesehen, die im Normalbetrieb des Kernreaktors 1 unerwünschte Wärmeverluste reduziert.

Im Sicherheitskonzept des hier beschriebenen Kernreaktors 1 wird als größter anzunehmender Unfall (GAU) ein Störfall berücksichtigt, der zu einer Kernschmelze führt. Tritt ein derartiger Störfall ein, so erfolgt eine Außenkühlung des Reaktordruckbehälters 3 durch eine Kühlflüssigkeit, beispielsweise Wasser. Hierfür ist zwischen dem Reaktordruckbehälter 3 und der thermischen Isolierung 6 ein Hohlraum oder Flutungsraum 7 vorgesehen, welcher über einen Durchbruch 8 durch die thermische Isolierung 6 im Bodenbereich des Reaktordruckbehälters 3 mit einer Kammer 9 unterhalb des selbigen verbunden ist. In diese in den Betonmantel 5 eingearbeitete Kammer 9, in welcher auch der aus dem Reaktordruckbehälter herausragende Teil der Steuerstäbe 4 und ggf. deren Antrieb positioniert ist, kann, sofern notwendig, die Kühlflüssigkeit eingeleitet werden. Der Raum um den Reaktordruckbehälter 3 samt thermischer Isolierung 6 und über den Durchbruch 8 auch der Flutungsraum 7 werden sodann mit der Kühlflüssigkeit aufgefüllt.

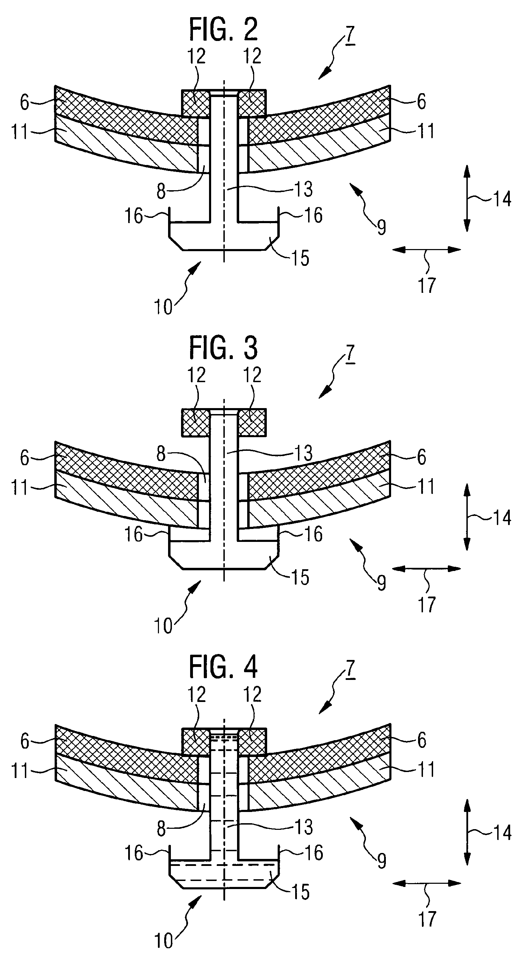

Zur besseren Vereinbarkeit der beiden Zielsetzungen, also einer möglichst effektiven thermischen Isolierwirkung im Normalbetrieb des Kernreaktors 1 einerseits und einer möglichst effektiven Außenkühlung des Reaktordruckbehälters 3 im Störfall andererseits, ist in jenem Durchbruch 8 ein Ventil 10 eingesetzt. Die Abbildungen Fig. 2 bis Fig. 4 zeigen jeweils einen Querschnitt durch ein solches Ventil 10 samt dessen Sitz oder vielmehr Spielsitz im Durchbruch 8 in verschiedenen Situationen. Der Durchbruch 8 durchsetzt im vorliegenden Ausführungsbeispiel neben der thermischen Isolierung 6 auch eine Abschirmplatte 11. Diese dient als materielle Barriere zur Abschirmung der Kammer 9, in der sich zeitweise auch Wartungspersonal aufhält, gegen Strahlung.

Das Ventil 10 kann im Wesentlichen als dreiteilig angesehen werden, wobei die Dreiteilung in der Regel nicht physischer sondern rein funktioneller Natur ist. Innerhalb des Flutungsraumes 7 sitzt der als Ventilkörper 12 bzw. Dichtkörper wirkende zylinderförmige oder ringförmige erste Teil, welcher vorzugsweise aus einem thermisch isolierenden Werkstoff gefertigt ist, und der an seiner der Isolierung 6 zugewandten Auflagefläche mit geeigneten Dichtelementen versehen sein kann. Ein hier als Ventilstange 13 bezeichneter rohrartiger Teilkörper bildet den zweiten Teil des Ventils 10. Jene Ventilstange 13 durchgreift den Durchbruch 8 in axialer Richtung 14 und verbindet so die beiden übrigen Ventilteile miteinander. Als dritter Teil schließlich ist ein zylinder- oder pilzartig geformter Hohl- oder Schwimmerkörper 15 vorgesehen. Auf der der Ventilstange 13 zugewandten Oberseite des in der Kammer 9 angeordneten Schwimmerkörpers 15 sind randseitig mehrere Distanzstifte 16 angeformt.

In Bezug auf die Abmessungen ist es zweckmäßig, wenn der Ventilkörper 12 und der Schwimmerkörper 15 in radialer Richtung 17 eine größere Ausdehnung aufweisen als der Durchbruch 8 und wenn die Ventilstange 13 in axialer Richtung 14 eine größere Ausdehnung besitzt als besagter Durchbruch 8. Auf diese Weise wird das nachfolgend dargelegte Funktionsprinzip des Ventils 10 realisiert.

Im Normalbetrieb des Kernreaktors 1 liegt der Ventilkörper 12 von der Flutungsraumseite her am Durchbruch 8 an und verdeckt oder verschließt selbigen vollständig. Dadurch wird die fehlende thermische Isolierwirkung im Bereich des Durchbruches 8 weitestgehend kompensiert. Eine Luftkonvektion durch den Durchbruch 8 hindurch wird verhindert.

Im Störfall hingegen erfolgt eine Einleitung von Kühlflüssigkeit in die Kammer 9. Der Bereich unterhalb des Reaktordruckbehälters 3 samt dessen thermischer Isolierung 6 füllt sich dementsprechend mit der Kühlflüssigkeit, so dass diese letztlich auch den Schwimmerkörper 15 umhüllt. Die resultierende Auftriebskraft bewirkt dann eine Anhebung des Schwimmkörpers 15 mitsamt des über die Ventilstange 13 daran befestigten Ventilkörpers 12. Der Schwimmerkörper 15 bewegt sich dabei so weit nach oben, bis die Distanzstifte 16 an die Abschirmplatte 11 stoßen. Das Ventil 10 befindet sich nun in der Öffnungsstellung und die Kühlflüssigkeit kann zwischen den Distanzstiften 16 hindurch sowie durch den Durchbruch 8 seitlich an der Ventilstange 13 vorbei in den Flutungsraum 7 einströmen.

Hat der Flüssigkeitspegel im Flutungsraum 7 einen vorgesehenen Wert erreicht, dann fließt die Kühlflüssigkeit von der Ventilkörperseite her durch die Ventilstange 13 in den Hohlraum des Schwimmerkörpers 15, wodurch sich die resultierende Auftriebskraft allmählich verringert. Als Folge senkt sich das Ventil 10 im Durchbruch 8 wieder ab und verschließt diesen.

### Bezugszeichenliste

- 1: Kernreaktor
- 2: Kern
- 3: Reaktordruckbehälter
- 4: Steuerstab
- 5: Betonmantel
- 6: thermische Isolierung
- 7: Flutungsraum
- 8: Durchbruch
- 9: Kammer
- 10: Ventil
- 11: Abschirmplatte
- 12: Ventilkörper
- 13: Ventilstange
- 14: axiale Richtung
- 15: Schwimmerkörper
- 16: Distanzstift
- 17: radiale Richtung

## Patentansprüche

1. Kernreaktor (1) mit einer seinen Reaktordruckbehälter (3) umschließenden thermischen Isolierung (6) sowie mit einem einen Abstand zwischen dem Reaktordruckbehälter (3) und der thermischen Isolierung (6) bildenden Flutungsraum (7), wobei die thermische Isolierung (6) einen verschließbaren Durchbruch (8) zur bedarfsweisen Einleitung von Kühlwasser zur Außenkühlung des Reaktordruckbehälters (3) im Störfall aufweist, wobei der Durchfluß des Kühlwassers durch den Durchbruch (8) durch ein Schwimmerventil (10) gesteuert ist, und wobei ein Ventilkörper (12) des Schwimmerventils (10) in seiner Schließstellung innerhalb des Flutungsraums (7) am Durchbruch (8) durch die thermische Isolierung (6) derart anliegt, dass der Durchbruch (8) vollständig abgedeckt ist,
**dadurch gekennzeichnet, dass**
- der Ventilkörper (12) mit einer Ventilstange (13) verbunden ist, die den Durchbruch (8) vertikal durchsetzt und
- mit einem außerhalb der thermischen Isolierung (6) positionierten Schwimmerkörper (15) über die Ventilstange (13) verbunden ist, welcher im Falle der Umspülung durch Kühlwasser die Ventilstange (13) samt Ventilkörper (12) anhebt, wodurch der Kühlwasserfluß in den Flutungsraum (7) freigegeben ist.

2. Kernreaktor (1) nach Anspruch 1, wobei der Durchbruch (8) im Bodenbereich des Reaktordruckbehälters (3) angeordnet ist.

3. Kernreaktor (1) nach Anspruch 1 oder 2, wobei mehrere Durchbrüche (8) vorgesehen sind.

4. Kernreaktor (1) nach einem der Ansprüche 1 bis 3, wobei die Ventilstange (13) den Durchbruch (8) im Bodenbereich mit einem den ungehinderten Kühlwasserdurchfluß gestattenden Spielsitz durchsetzt.

5. Kernreaktor (1) nach einem der Ansprüche 1 bis 4, wobei die Ventilstange (13) von ihrem ventilkörperseitigen Ende her in axialer Richtung (14) ausgehöhlt, insbesondere ausgebohrt, ist und wobei der Aushöhlungs- bzw. Ausbohrungskanal in einen Hohlraum im Schwimmerkörper (15) ausmündet.

6. Kernreaktor (1) nach einem der Ansprüche 1 bis 5, wobei der Schwimmkörper (15) auf seiner mit der Ventilstange (13) verbundenen Oberseite angeordnete Distanzelemente oder Distanzvorsprünge aufweist.

7. Kernreaktor (1) nach einem der Ansprüche 1 bis 6, wobei der Verschluß für den Durchbruch (8) im Wesentlichen aus einem thermisch isolierenden Werkstoff besteht.

## Claims

1. A nuclear reactor (1) having a thermal insulation (6) enclosing its reactor pressure vessel (3) as well as a flooding space (7) forming a distance between the reactor pressure vessel (3) and the thermal insulation (6), wherein the thermal insulation (6) comprises a closable opening (8) for introducing cooling water, when required, for externally cooling the reactor pressure vessel (3) in a hazardous incident, wherein the flow of the cooling water through the opening (8) is controlled by a float valve (10) and wherein a valve body (12) of the float valve (10), in its closed position, bears against the opening (8) inside the flooding space (7), due to the thermal insulation (6), in such a manner that the opening (8) is completely covered,
**characterized in that**
- the valve body (12) is connected with a valve rod (13) which vertically passes through the opening (8) and
- is connected, via the valve rod (13), with a float body (15), which is positioned outside the thermal insulation (6) and which lifts the valve rod (13), when cooling water flows around it, together with the valve body (12), thus releasing the cooling-water flow into the flooding space (7).

2. The nuclear reactor (1) of claim 1, wherein the opening (8) is arranged in the bottom area of the reactor pressure vessel (3).

3. The nuclear reactor (1) of claim 1 or 2, wherein several openings (8) are provided.

4. The nuclear reactor (1) of any of claims 1 to 3, wherein the valve rod (13) passes through the opening (8) in the bottom area with a clearance fit that allows the unhindered throughflow of cooling water.

5. The nuclear reactor (1) of any of claims 1 to 4, wherein the valve rod (13) is hollowed out, in particular drilled out, from its valve body-side end in the axial direction (14), and wherein the hollowing or drilling channel runs into a cavity in the float body (15).

6. The nuclear reactor (1) of any of claims 1 to 5, wherein the float body (15) includes spacing elements or spacing projections arranged on its top side connected with the valve rod (13).

7. The nuclear reactor (1) of any of claims 1 to 6, wherein the closure for the opening (8) substantially consists of a thermally insulating material.

## Revendications

1. Réacteur nucléaire (1) ayant une isolation thermique (6) enfermant sa cuve (3) de réacteur ainsi qu'un espace de noyage (7) formant une distance entre la cuve (3) de réacteur et l'isolation thermique (6), dans lequel l'isolation thermique (6) comprend un passage (8) fermable pour introduire de l'eau de refroidissement, si besoin est, pour le refroidissement extérieur de la cuve (3) de réacteur dans le cas d'une défaillance, dans lequel l'écoulement de l'eau de refroidissement au travers du passage (8) est commandé par une soupape à flotteur (10) et dans lequel un corps de soupape (12) de la soupape à flotteur (10), dans sa position fermée, s'appuie contre le passage (8) à l'intérieur de l'espace de noyage (7), en raison de l'isolation thermique (6), de façon que le passage (8) est complètement recouvert,
**caractérisé en ce que**
- le corps de soupape (12) est relié à une tige de soupape (13) qui passe verticalement au travers du passage (8) et
- est relié, par la tige de soupape (13), à un flotteur (15), qui est positionné à l'extérieur de l'isolation thermique (6) et qui relève la tige de soupape (13) lorsque de l'eau de refroidissement coule autour de celle-ci, ensemble avec le corps de soupape (12), relâchant ainsi le flux de l'eau de refroidissement vers l'espace de noyage (7).

2. Réacteur nucléaire (1) selon la revendication 1, dans lequel le passage (8) est disposé dans la région du fond de la cuve (3) de réacteur.

3. Réacteur nucléaire (1) selon la revendication 1 ou 2, dans lequel plusieurs passages (8) sont prévus.

4. Réacteur nucléaire (1) selon l'une quelconque des revendications 1 à 3, dans lequel la tige de soupape (13) passe au travers du passage (8) dans la région du fond avec un ajustement avec jeu qui permet l'écoulement libre de l'eau de refroidissement.

5. Réacteur nucléaire (1) selon l'une quelconque des revendications 1 à 4, dans lequel la tige de soupape (13) est creusée, en particulier alésée, de son côté de corps de soupape en direction axiale (14), et dans lequel l'orifice de creusage ou d'aléage débouche dans une cavité dans le flotteur (15).

6. Réacteur nucléaire (1) selon l'une quelconque des revendications 1 à 5, dans lequel le flotteur (15) comprend des éléments d'écartement ou des saillies d'écartement disposés sur sa surface supérieure reliée à la tige de soupape (13).

7. Réacteur nucléaire (1) selon l'une quelconque des revendications 1 à 6, dans lequel la fermeture pour le passage (8) consiste essentiellement en un matériau d'isolation thermique.
